# EUROPEAN PATENT SPECIFICATION

(11) **EP 0 810 701 B1**
(45) Date of publication and mention of the grant of the patent: **20.06.2001**
(21) Application number: 97107055.2
(22) Date of filing: 29.04.1997
(51) Int. Cl.: H02B 1/30, H02B 1/40

(54) **Modular metal cabinet for electric apparatus for wall or floor mounting**
Modularer metallischer Schrank für elektrisches Gerät, für eine Wand- oder Bodenbefestigung
Armoire métallique modulaire pour matériel électrique avec fixation murale ou au sol

(30) Priority: 30.05.1996 IT PN960023 U
(43) Date of publication of application: 03.12.1997
(73) Proprietor: Hager-Lumetal S.p.A., 33080 Porcia, Pordenone (IT)
(72) Inventor: Vendrametto, Maurizio, 33080 Porcia, Pordenone (IT); Del Santo, Roberto, 33080 Roveredo in Piano, Pordenone (IT)
(74) Representative: Agostini, Agostino

(56) References cited:
- EP-A- 0 143 718
- DE-A- 1 640 852
- DE-U- 1 910 085
- FR-A- 2 702 314

## Description

### STATE OF THE ART

The present invention refers to a metal cabinet for accomodating electric control and switching apparatuses, which is formed by structural component parts and can most easily be either wall or floor mounted, even directly on the installation site.

It is a generally known and common practice to accomodate electric control and switching apparatuses, such as for instance those apparatuses needed in connection with power distribution systems in residential buildings or control and supervision systems associated to industrial plants, in metal cabinets made substantially in the shape of a parallelepipedon.

Whenever the degree of protection required by the application allows it, such cabinets, instead of being pre-assembled at the factory, can be made with structural component parts that are capable of being assembled directly on the site of installation, or in an assembly shop located in the immediate vicinity thereof, by the same workers or operators that are charged with the task of mounting and connecting the related electric apparatuses.

In any case, the utilization of modular structural component parts appears to be advantageous not only in view of a more convenient storage and transport thereof, but also facilitating their assembly.

A well-known construction of a cabinet of the above mentioned kind, in which the electric apparatuses are mounted on and supported by the rear wall thereof, is described in EP-A-0 143 718, wherein an assembly according to following sequence is suggested: fastening by means of first four screws of four rigid elements, intended to act as support means for the other walls, said elements extending perpendicularly from the corners of the rear wall; free-sliding insertion of the upper, lower and side walls on said rigid elements; locking of the walls on the rigid elements by means of second four screws; assembly of a front door, if any.

A major drawback of such a cabinet lies in the fact that the structure thereof becomes a self-bearing one, ie. acquires stability, only after the second four screws are duly tightened since, before such a tightening, the side, top and bottom walls are in contact with, but not fastened to said rigid elements. A further major drawback lies in the fact that the same dimensional and shape characteristics of the rigid elements, which extend all over the corresponding dimension (depth) of the cabinet, prove to be a hindrance to the insertion and tightening of said first four fastening screws that are positioned on the rear side of the cabinet. Furthermore, it proves unfailingly necessary to in any case make use of a minimum amount of eight screws to complete the assembly of such a cabinet. Finally, should a need arise to expand the cabinet either horizontally or vertically in view of accomodating a greater number of electric apparatuses therein, a whole set of operations, including the replacement of "simple" rigid elements with "double" ones in the zone in which the various "cabinet modules" are due to be interfaced with each other, must be carried out which prove to be quite difficult to accomplish and, indeed, not so suited to be carried out by a single worker. It should furthermore be noticed that, once the desired vertical expansion is completed, the individual "cabinet modules" are identifiable owing to the presence of transverse elements that prevent the electric apparatuses housed in the cabinet from being fully and conveniently accessible from the front. This brings about a major drawback in that it is not practically possible, in this type of prior-art construction, for modular-type or full-height doors to be used in the case of vertically expanded cabinets.

From document FR-A-2 702 314 a cabinet for accomodating electrical apparatuses is also known including a structural chassis consisting of the four bent edges of a rear panel, at least four horizontal and two vertical beams attached to one another by screw means. The left respectively right panel and the upper respectively lower panel of the casing are attached through interference joints of the tongue-and-groove fitting type to the said structural part. Provided that so many parts of the chassis need to be separately moved up to the site of installation, the assembly sequence is quite long, considering that at least eight screws have to be used, furthermore the resulting structure of this cabinet is somewhat unstable since a mutual direct fixation of the four lateral panels is not foreseen.

### PURPOSES OF THE INVENTION

It is a purpose of the present invention to improve the construction of a metal cabinet of the above cited type, in particular in view of minimizing both the variety of the modular component parts that make it up and the number of the component parts other than the structural ones, ensuring a good structural stability of the assembly even before the insertion and tightening of the fastening screws, and allowing for a particularly simple and rapid assembly of the cabinet to be done, either directly on the installation site or, for instance, in a shop located nearby, by a single worker or operator.

A cabinet according to the invention can furthermore be installed in a either wall-mount (suspended) or floor-mount (standing) configuration and is capable of being expanded both horizontally and vertically by a single operator.

In particular, in the case of a vertically expanded cabinet, the present invention allows for the electric apparatuses contained therein to be fully and conveniently accessed to from the front, with the additional advantage of the ability of using,if necessary, front closing doors of either modular or full-height type.

All these aims are reached in a cabinet provided with the characteristics and features as recited in the appended claims.

### SHORT DESCRIPTION OF THE ACCOMPANYING DRAWINGS

In order to enable the present invention to be more readily and clearly understood, a detailed description of a preferred embodiment thereof will be given below by way of non-limiting example with reference to the accompanying drawings, in which:
- Figure 1 is an exploded view of a metal cabinet;
- Figure 2 is a view illustrating the details of the reciprocal assembly of cabinet component parts with each other according to a partially sectioned view along the II-II plane of Figure 1;
- Figure 3 is a view of two wall supporting rigid elements and the rod with which they can be joined to each other vertically;
- Figure 4 is a schematical view of the extension possibilities of the cabinet.

### DESCRIPTION OF A PREFERRED EMBODIMENT OF THE INVENTION

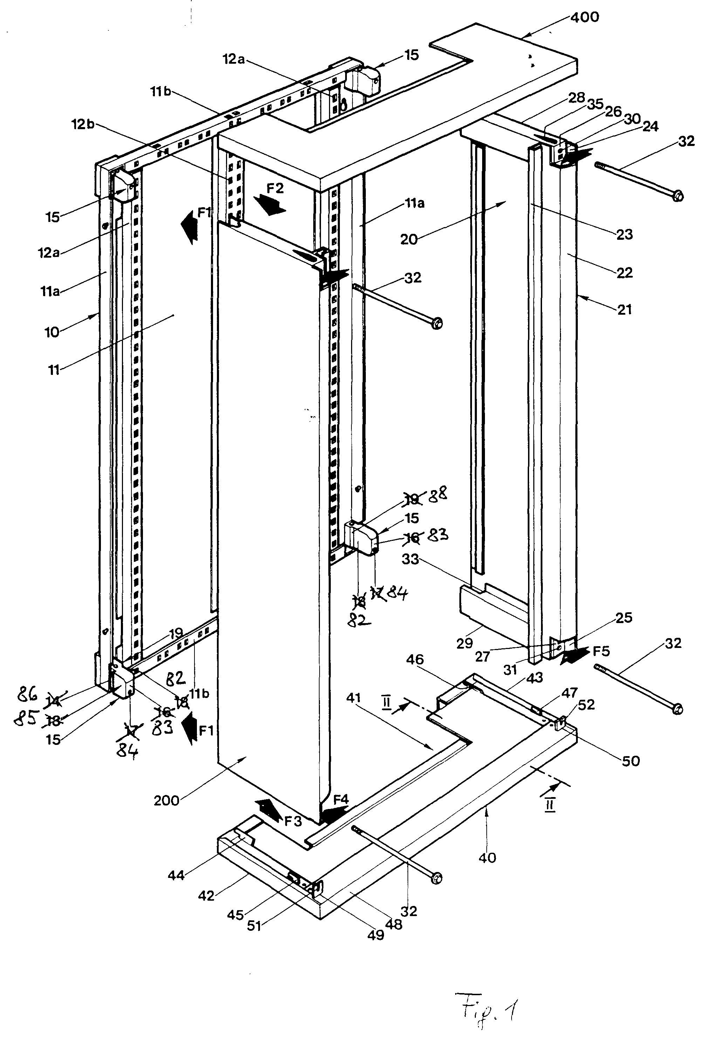

The basic structural component parts of a parallelepipedon-shaped metal cabinet adapted for wall mounting are: a rear panel 10, right-hand and left-hand side walls 20 and 200, respectively, horizontal bottom and top walls 40 and 400, respectively, as this is illustrated in Figure 1. The mutually opposing walls, ie. 20, 200 and 40, 400, respectively, are precisely identical in the case of a cabinet for wall-mount installation or, in the case of a cabinet intended for floor-mount installation, the bottom wall is duly provided with a per sè known socle arrangement.

The rear panel 10 of the cabinet comprises a rectangular metal wall 11 that has, on the vertical sides thereof, right-angle foldings 11 a and, on the horizontal sides thereof, C-shaped foldings 11b, which are interrupted at a certain distance from the corners. The wall 11 is further strengthened centrally and along its vertical sides by section bars 12a, 12b, which are used to also act as a support for a plurality of electric control and switching apparatuses (not shown) through the use of appropriate fastening means.

When the cabinet shall be installed in a wall-mount configuration, the rear panel 10 is provided, along the upper horizontal side thereof, with a bracket (not shown) and, according to a feature of the present invention, two threaded elements (not shown, either) in the lower portion which are adapted to engage the wall 11 and are adjustable from the front so as to ensure a correct arrangement of the cabinet vertically regardless of the actual verticality of the mounting wall.

According to a further feature of the present invention, the rear panel 10 is supplied to the installers with four rigid elements 15 (herein referred to as "pillars", which is the term by which they are generally known to the installers) that are already rigidly joined to the corners of the rectangular wall 11 thereof, so that they extend in a substantially orthogonal manner with respect to the same wall. The pillars 15 are rather short as compared to the side that constitutes the depth of the cabinet, and therefore do not impair the easy transportability of the rear panel.

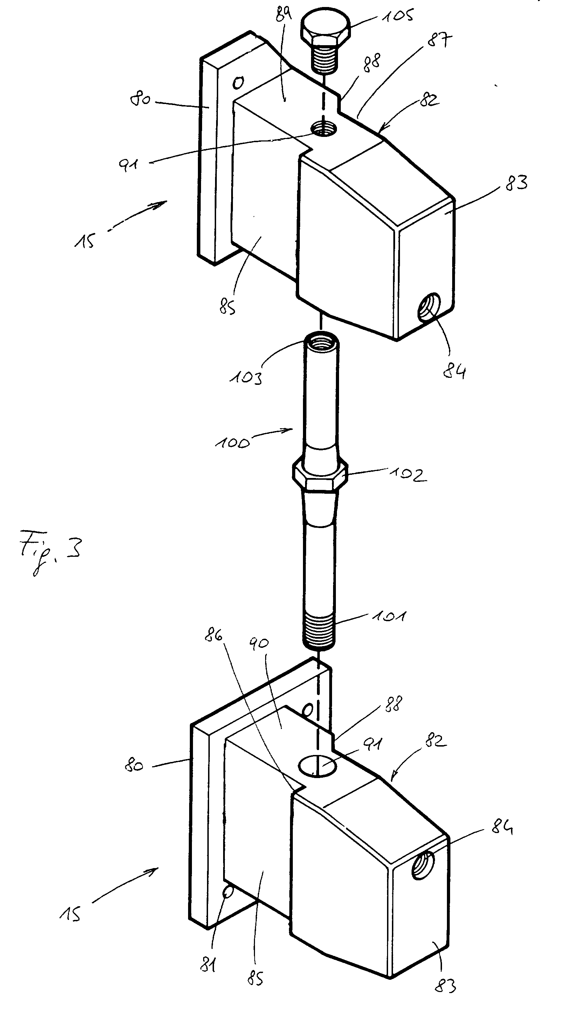

As illustrated in Figure 3, a pillar 15, which may be made of a die-cast metal alloy, comprises a base 80 with holes 81 for the fastening elements (not shown) provided for attachment to the wall 11, and a substantially prismatic, tapered body 82. This body 82 is defined by a front face 83 with a threaded hole 84, an outer vertical face 85 with a vertical step 86, an inner vertical face 87 with an undercut 88, a proximal horizontal face 89 and a distal horizontal face 90. A vertical through-hole 91extends between said horizontal faces 89, 90 and is threaded along its section starting from the proximal face 89.

Since the vertical walls of the cabinet, which are formed by flanged and press-worked sheet-metal blanks, are identical, only the right-hand wall 20 will be described below with particular reference to Figure 1.

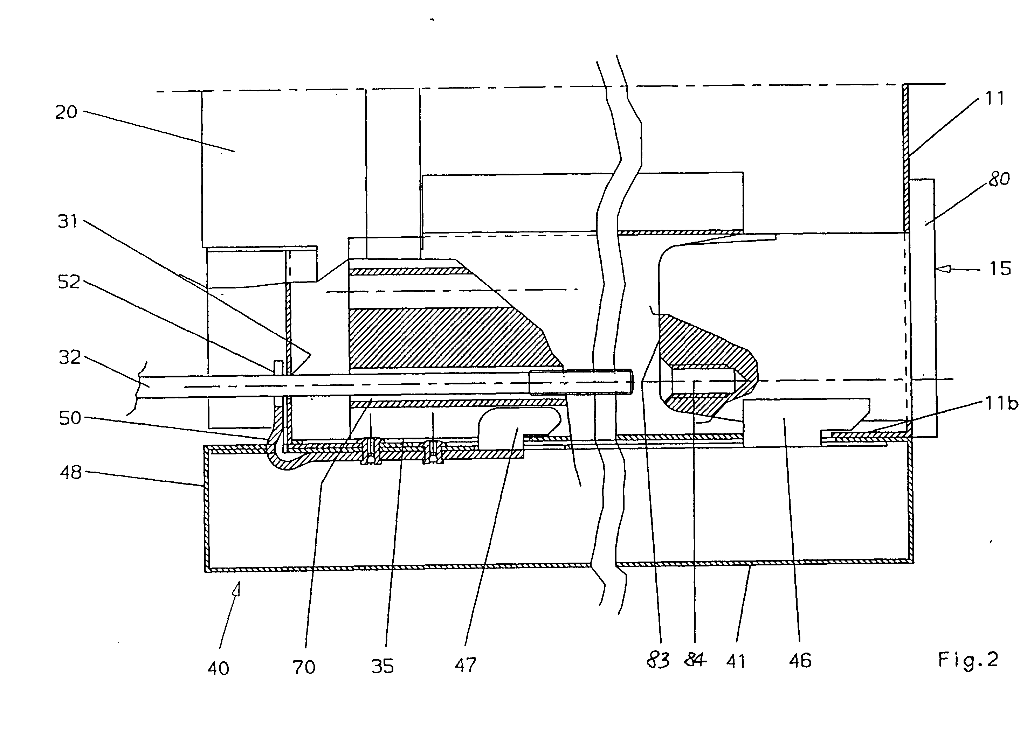

The front edge 21 of the wall 20 has a sequence of foldings in such a manner as to form a vertical riser, or upright, constituted by twoportions 22 and 23 that are arranged at an angle of 90° and have a C-shaped horizontal section. At its upper and lower ends, the first C-shaped portion 22 of the above mentioned vertical riser is provided with two cutouts 24 and 25, which "expose" the heads 26 and 27 of the upper box-like folded edge 28 and the lower box-like folded edge 29, respectively, of the same wall 20. A circular hole 30 and 31 opens in each one of the heads 26 and 27, respectively, to accomodate the stems of respective screws 32 used to fasten the cabinet walls, such screws being only in the number of four as this will be described in greater detail further on. The exposed side of the second C-shaped portion 23 of the afore cited vertical riser acts as a ledge for the possible front closing doors and/or panels of the cabinet. In the rear zone of the inner surfaces of the box-like folded edges 28, 29 there are provided longitudinal recesses 33 (only the recess in the lower box-like folded edge 29 is shown in Figure 1) having such a shape and being so sized as to perfectly fit together with the cross-section of the body 82 of the pillars 15. In the front zone of the outer surfaces of the box-like folded edges 28 and 29 there are provided tapered holes 35 (only the hole in theupper box-like folded edge 28 is shown in Figure 1) for the purposes that will be better explained further on. Longitudinal sleeves 70 are accomodated inside the same box-like folded edges 28, 29, duly aligned with the holes 30 and 31 of the heads 26 and 27, to the purpose of guiding the screws 32 when these are inserted in the direction of the arrow F5 (see Figure 1) and, therefore, preventing them from falling and getting lost (see also Figure 2).

Also the horizontal walls of the cabinet, at least as far as the present invention is concerned, are similar to each other, so that only the lower wall 40 will be described here. These walls are generally made of a single stamped sheet-metal blank with its edges appropriately folded and welded so as to obtain a box-like shaped rigid structure. As seen in its plan view, said lower wall 40 has a U-like shape with a slot 41 adapted to accomodate a usual cable-entry strain-relief flange (not shown). On the inner side faces 42 and 43 of said lower wall 40 there are provided two pairs of longitudinal tabs 44, 45 and 46, 47, which are folded backwards to acquire a L-like shape, while two brackets 49 and 50 are fastened near the corners. Said brackets 49 and 50 are so arranged as to extend parallelly with respect to said front face 48 of the lower wall 40. They are further provided with a slot 51 and 52, respectively, to retain the head of the fastening screws 32 (see Figure 2).

### CABINET ASSEMBLY SEQUENCE

By way of non-limiting example, all of the operations described below are referred to a wall-mount cabinet, ie. a cabinet to be installed on a wall, and are intended as being carried out by a single worker either in an assembly shop or directly on the site of installation.

The assembly starts with the rear panel 10 (which, as it has already been said, is supplied to the installers with its four "pillars" 15 already fastened to the wall 11) being attached to the mounting wall with appropriate per sè known fastening means. Through the above mentioned threaded adjustment elements, the panel is arranged in its correct vertical position. All various electric control and switching apparatuses can at this point be assembled in the cabinet and duly interconnected and, immediately thereafter, the actual assembly of the remaining part of the cabinet can be completed according to the following sequence of the related operations.

The vertical right-hand wall 20 is attached to the rear panel 10 by pushing it in the direction shown by the arrow Fl so that the seat 33 is enabled to self-align on the body 82 of the therewith associated pillars 15 and to engage the same body, according to a main feature of the present invention, by giving rise to a typical interference fitting of the tongue-and-groove type, until the rear surface of the box-like folded edges 28 and 29 abuts against the wall 11 of the rear panel 10. As a result, the side wall 20 remains attached to the rear panel 10 and firmly held in position by the pillars 15, without any need arising for screws or similar fastening means to be used to such a purpose. The same sequence is of course followed to assemble the left-hand side wall 200.

The next step of the cabinet assembly sequence calls for the lower wall 40 to be assembled. To this purpose, said wall 40 is lifted and brought against the side walls 20 and 200 in the direction shown by the arrow F3 in such a manner as to enable the tabs 45 and 47 to enter the tapered apertures 35 that are drilled in the outer surfaces of the box-like folded edges 28 and 29 of said side walls, and the tabs 44 and 46 are enabled to self-align inside the same box-like folded edges. The wall 40 is then pushed in the direction shown by the arrow F4 in such a manner as to enable the tabs 45 and 47 to establish a firm coupling with the surfaces of the box-like folded edges provided with the tapered apertures 35, and the tabs 44 and 46 are enabled to do the same with the foldings 11b of the rear wall 11, as this is best illustrated in Figures 1 and 2. Also these joints, according to a main feature of the present invention, are interference fittings of the tongue-and-groove type.

The upper wall 400 is assembled in a similar way, said wall being first lowered in the direction shown by the arrow F2 on to the side walls 20, 200 and is then fastened to the same side walls by pushing it in the direction shown by the arrow F4.

A major advantage of the present invention lies in the fact that, as early as at this stage of the assembly process, ie. with the structural elements of the cabinet joined to each other through just the above described interference fittings of the tongue-and-groove type, the above described cabinet is fully self-bearing, ie. has a good stability along the three cartesian axes, even before the screws 32 are tightened. In particular, thanks to the tabs 44, 46 and 45, 47 that are folded backwards in the shape of a L, the lower wall 40 is retained against the other walls.

The subsequent final stage of the cabinet assembly process calls for the screws 32 to be tightened against the slots 51 and 52 of the brackets 49 and 50. Through such a tightening of each single screw 32 the therebehind lying box-like folded edge 28, 29 of the respective vertical wall is compressed along with the side edge 43 of the associated horizontal wall 40. Such a tightening has the advantage of conferring a high degree of rigidity to the four corners of the cabinet, with a resulting high stability of the whole structure. It should finally be noticed thatsuch a tightening of the screws 32 does not involve any difficulty in the case that the assembly is carried out by a single person, since the heads of the screws are substantially flush with the front faces 48 of the horizontal walls 40.

### OPERATIONS REQUIRED FOR EXTENDING THE CABINET

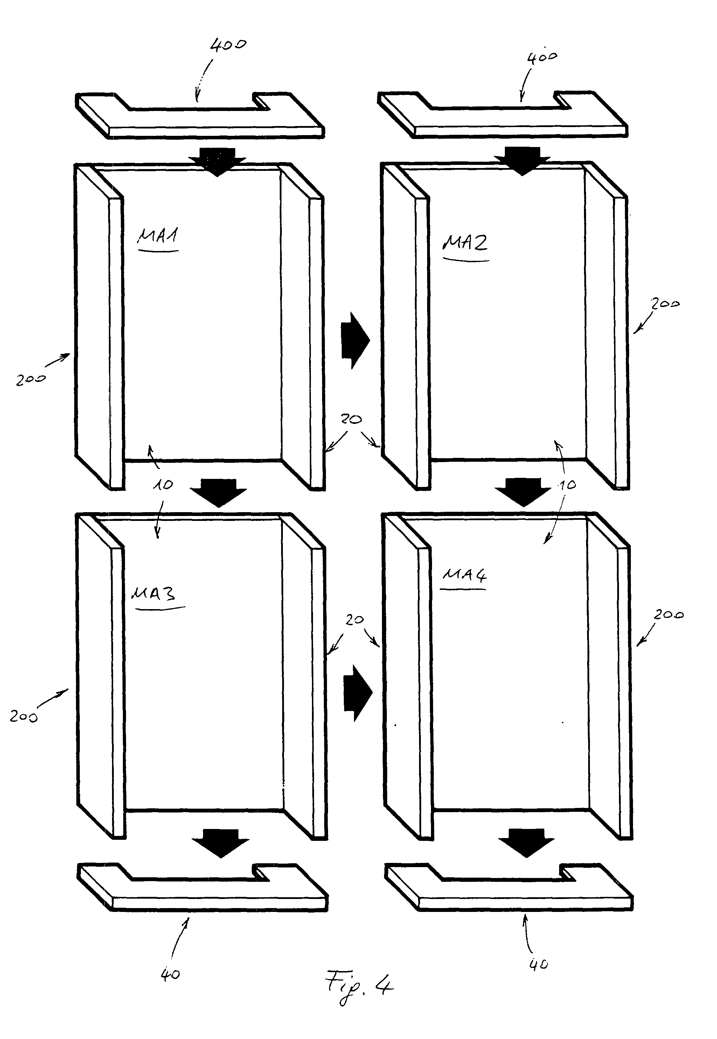

Extending the cabinet vertically and/or horizontally in view of being able to accomodate a greater number of electric apparatuses in it, calls for a plurality of "cabinet modules", such as the ones that are referred to at MA1, MA2, MA3, MA4 .... in Figure 4, to be assembled into a (of course stable) single structure.

Let us now first of all consider an extension of the cabinet vertically, wherein two or more "cabinet modules" are arranged upon each other and joined to each other, such a module being in this case as described above but without the respective horizontal walls in their joining zone, so as to ensure full accessibility to the electric apparatuses from the front. For mutually fastening in the rear zone the side walls of two adjacent "modules", a rigis rod 100 with an externally threaded end portion 101, a central nut 102 and an innerly threaded end portion 103 (see Figure 3) is used. This rod 100 is inserted in the through-hole 91 of the pillar of the lower "module" so that the externally threaded end portion 101 is able to engage, by turning the nut 102, the threaded portion of the same through-hole, and so that a retaining screw 105 can be inserted, starting from the horizontal proximal face 90 of the pillar of the upper "module" in the innerly threaded end portion 103. Simple brackets or clamps of a per sè known type are on the contrary used in the front zone to join the same side walls. As opposed to prior-art solutions, the possibility is therefore given here for either modular or full-height front doors to be used on a cabinet that has been extended vertically in this manner.

Brackets or clamps similar to the above cited ones are furthermore used to join the vertical walls of adjacent "modules" to each other in the case of a cabinet being extended horizontally through a side-by-side arrangement of two or more "cabinet modules" that are then joined to each other. In this case, however, the intermediate vertical walls are retained.

The above description clearly shows how the present invention is such as to actually enable a metal cabinet for electric control and switching apparatuses to be provided so as to fully reach all of the afore indicated aims. In particular, a special emphasis should be put on the simplicity of the various phases of the operations, including those required for extending the cabinet, that can therefore be conveniently carried out by a single person, for instance the same person that is charged with the wiring and interconnection of the electric apparatuses.

## Claims

1. Metal cabinet, adapted to accomodate electric control and switching apparatuses and capable of being assembled and mounted starting from a plurality of structural component parts comprising a rear panel (10), rigid elements (15) that are retained at the comers of said panel (10) and extend substantially perpendicular to the wall (11) thereof, at least a first pair (20, 200) and a second pair (40, 400) of mutually opposing walls, said walls (20, 200, 40, 400) being supported by said rigid elements (15) by means of joints of the interference tongue-and-groove fitting type, characterized in that the rigid elements (15) are short relatively to the parallel dimension of the opposing walls (20, 200, 40, 400) and in that the means to realize the said joints of the interference tongue-and-groove fitting type consist of at least two tabs (45, 47) which are provided on each one of the mutually opposing walls of said second pair (40, 400) and of corresponding tapered apertures (35) drilled in surfaces of box-like folded edges (28, 29) of each one of the mutually opposing walls of said first pair (20, 200) so as to ensure a direct matching of said first and second pair of mutually opposed walls (20, 200, 40, 400).

2. Metal cabinet according to claim 1, characterized in that said rigid elements (15) are attached to the corners of the rear panel (10), preferably by means of rivets or similar means, in a moment preceding the assembly of the cabinet.

3. Metal cabinet according to claim I or 2, characterized in that each rigid element (15) is provided with at least a substantially vertical through-hole (91), which has a threaded portion starting from the proximal horizontal surface thereof (89), and is further provided, on the front face (83) thereof, with at least a substantially horizontal threaded seat (84).

4. Metal cabinet according to claim 3, characterized in that it comprises screws (32) which, guided and retained by self-alignment means (30, 31, 70) provided on the first pair of mutually opposing walls (20, 200), are adapted to engage said threaded seats (84) of the rigid elements (15) so as to compress against each other the joining portions (28, 29, 43) of the walls and, as a result, to definitively tighten and consolidate the structure of the assembled cabinet.

5. Metal cabinet according to any claim I to 4, characterized in that it comprises threaded adjustment means which, by engaging the wall (II) of said rear panel (10), may be more or less extended towards the wall to which the cabinet is being mounted, so as to ensure the verticality thereof.

6. Metal cabinet formed by a plurality of modules (MA1, MA2, MA3, MA4), each one of them being substantially a cabinet according to any of the preceding claims, which are joined to each other vertically and/or horizontally so as to form a single enclosure that allows for full accessibility of the therein contained electric apparatuses from the front, characterized in that for mutually fastening the rigid elements (15) of two superposed, adjacent modules (MA1, MA2) on the rear side of the enclosure, rigid rods (100) are used, each rod having a externally threaded first end portion (101) adapted to engage said threaded portion of the through-hole (91) in a rigid element (15) of a first module (MAI), in particular an upper module, and extended along the through-hole of a corresponding rigid element of a second module (MA2), said rod (100) furthermore having an internally threaded second end portion (103) so as to be capable of being retained in position by a setscrew (105).

## Patentansprüche

1. Metallschrank zur Aufnahme elektrischer Steuerungs- und Schaltvorrichtungen, der von einer Vielzahl struktureller Einzelteile ausgehend zusammengebaut und montiert werden kann, die eine hintere Platte (10), starre Elemente (15), die an den Ecken der Platte (10) gehalten werden und sich im Wesentlichen senkrecht zu der Wand (11) erstrecken, wenigstens ein erstes Paar (20, 200) und ein zweites Paar (40, 400) einander gegenüberliegender Wände umfassen, wobei die Wände (20, 200, 40, 400) von den starren Elementen (50) mit Verbindungen vom Feder-und-Nut-Presspassungs-Typ getragen werden, **dadurch gekennzeichnet**, dass die starren Elemente (15) in Bezug auf die Parallelabmessung der einander gegenüberliegenden Wände (20, 200, 40, 400) kurz sind, und dass die Einrichtungen zum Ausführen der Verbindungen von Feder-und-Nut-Presspassungs-Typ aus wenigstens zwei Zungen (45, 47) bestehen, die an jeder der einander gegenüberliegenden Wände des zweiten Paars (40, 400) vorhanden sind, sowie aus entsprechenden konischen Öffnungen (35), die in Flächen von kastenartig gebogenen Kanten (28, 29) jeder der einander gegenüberliegenden Wände des ersten Paars (20, 200) gebohrt sind, um so eine direkte Passung des ersten und des zweiten Paars einander gegenüberliegender Wände (20, 200, 40, 400) zu gewährleisten.

2. Metallschrank nach Anspruch 1, **dadurch gekennzeichnet,** dass die starren Elemente (15) vorzugsweise mit Nieten oder ähnlichen Einrichtungen zu einem Zeitpunkt vor dem Zusammenbau des Schrankes an den Ecken der hinteren Platte (10) angebracht werden.

3. Metallschrank nach Anspruch 1 oder 2, **dadurch gekennzeichnet,** dass jedes starre Elemente (15) mit wenigstens einem im Wesentlichen vertikalen Durchgangsloch (91) versehen ist, das von der vorderen horizontalen Fläche (89) ausgehend mit einem Gewindeabschnitt versehen ist, und des Weiteren an der vorderen Fläche (83) mit wenigstens einer im Wesentlichen horizontalen, mit Gewinde versehenen Aufnahme (84) versehen ist.

4. Metallschrank nach Anspruch 3, **dadurch gekennzeichnet,** dass er Schrauben (32) umfasst, die, von Selbstausrichtungseinrichtungen (30, 31, 70), die an dem ersten Paar einander gegenüberliegender Wände (20, 200) vorhanden sind, geführt und gehalten mit den mit Gewinde versehenen Aufnahmen (84) der starren Elemente (15) in Eingriff kommen, um die Verbindungsabschnitte (28, 29, 43) der Wänden aneinander zu drücken, wodurch die Struktur des zusammengebauten Schrankes endgültig angezogen und stabilisiert wird.

5. Metallschrank nach einem der Ansprüche 1 bis 4, **dadurch gekennzeichnet, dass** er mit Gewinde versehene Einstelleinrichtungen umfasst, die durch Eingriff mit der Wand (11) der hinteren Platte (10) mehr oder weniger auf die Wand zu ausgedehnt werden können, an der der Schrank montiert wird, um die Vertikalität desselben zu gewährleisten.

6. Metallschrank, der aus einer Vielzahl von Modulen (MA1, MA2, MA3, MA4) besteht, wobei jeder von ihnen im Wesentlichen ein Schrank gemäß einem der vorangehenden Ansprüche ist, die vertikal und/oder horizontal so miteinander verbunden sind, dass sie ein einzelnes Gehäuse bilden, das vollständigen Zugang zu den darin enthaltenen elektrischen Vorrichtungen von der Vorderseite aus ermöglicht, **dadurch gekennzeichnet**, dass, um die starren Elemente (15) zweier übereinanderliegender, benachbarter Module (MA1, MA2) auf der Rückseite des Gehäuses aneinander zu befestigen, starre Stangen (100) eingesetzt werden, wobei jede Stange einen mit Außengewinde versehenen ersten Endabschnitt (101) aufweist, der mit dem mit Gewinde versehenen Abschnitt des Durchgangslochs (91) in einem starren Element (15) eines ersten Moduls (MA1), insbesondere eines oberen Moduls, in Eingriff kommt, und über das Durchgangsloch eines entsprechenden starren Elementes eines zweiten Moduls (MA2) geführt wird, wobei die Stange (100) des Weiteren einen mit Innengewinde versehenen zweiten Endabschnitt (103) aufweist, so dass sie mit einer Stellschraube (105) in Position gehalten werden kann.

## Revendications

1. Armoire électrique, adaptée pour recevoir des appareils de commande et de commutation électrique et pouvant être assemblée et montée en partant d'une pluralité de composants structurels comprenant un panneau arrière **(10),** des éléments rigides **(15)** qui sont retenus au niveau des angles dudit panneau **(10)** et s'étendent sensiblement perpendiculairement à la paroi **(11)** de celui-ci, au moins une première paire **(20, 200)** et une deuxième paire **(40, 400)** de parois mutuellement opposées, lesdites parois **(20, 200, 40,** 400) étant portées par lesdits éléments rigides **(15)** au moyen de joints du type montage à rainure et languette à interférence, caractérisée en ce que les éléments rigides **(15)** sont courts par rapport à la dimension parallèle des parois opposées **(20, 200, 40, 400)** et en ce que les moyens pour réaliser lesdits joints du type montage à rainure et languette à interférence consistent en au moins deux pattes **(45**, **47)** qui sont prévues sur chacune des parois opposées de ladite deuxième paire **(40, 400)** et en des ouvertures effilées **(35)** correspondantes percées dans des surfaces de coins **(28, 29)** pliées à la manière d'une boîte de chacun des parois mutuellement opposées de ladite première paire **(20, 200)** afin d'assurer une adaptation directe desdites première et deuxième paires de parois mutuellement opposées **(20, 200, 40, 400)**.

2. Armoire métallique selon la revendication 1, caractérisée en ce que lesdits éléments rigides **(15)** sont fixés aux angles du panneau arrière **(10)**, de préférence au moyen de rivets ou de moyens similaires, à un instant précédant le montage de l'armoire.

3. Armoire métallique selon la revendication 1 ou 2, caractérisée en ce que chaque élément rigide **(15)** est muni d'au moins un perçage sensiblement vertical **(91)**, qui a une partie filetée partant de sa surface horizontale proximale **(89)**, et est muni de plus, sur sa face frontale **(83)**, d'au moins un siège fileté **(84)** sensiblement horizontal.

4. Armoire métallique selon la revendication 3, caractérisée en ce qu'elle comprend des vis **(32)** qui, guidées et retenues par des moyens d'auto-alignement **(30, 31, 70)** prévus sur la première paire de parois mutuellement opposées **(20, 200),** sont adaptées pour s'engager dans lesdits sièges filetés **(84)** des éléments rigides **(15)** afin de comprimer l'une contre l'autre les parties de jonction **(28, 29, 43)** des parois et, en conséquence, de serrer et consolider définitivement la structure de l'armoire assemblée.

5. Armoire métallique selon l'une quelconque des revendications 1 à 4, caractérisée en ce qu'elle comprend des moyens de réglage vissés qui, en se mettant en prise dans la paroi **(11)** dudit panneau arrière **(10)**, peuvent s'étendre plus ou moins en direction du mur contre lequel est montée l'armoire, afin d'assurer la verticalité de celle-ci.

6. Armoire métallique formée d'une pluralité de modules **(MA1, MA2, MA3, MA4),** chacun d'entre eux étant sensiblement une armoire selon l'une quelconque des revendications précédentes, qui sont joints les uns aux autres verticalement et/ou horizontalement afin de former une enceinte unique qui permet une accessibilité complète depuis l'avant aux appareils électriques qu'elle contient, caractérisée en ce que, pour fixer mutuellement les éléments rigides **(15)** de deux modules adjacents **(MA1, MA2)** superposés, des tiges rigides **(100)** sont prévues, chaque tige ayant une première partie d'extrémité (101) filetée extérieurement et adaptée pour se mettre en prise dans ladite partie filetée du passage **(91)** dans un élément rigide **(15)** d'un premier module **(MA1),** en particulier un module supérieur, et pour s'étendre le long du passage d'un élément rigide correspondant d'un deuxième module **(MA2),** ladite tige **(100)** ayant de plus une deuxième partie d'extrémité **(103)** filetée intérieurement afin de pouvoir être retenue en place par une vis de fixation **(105).**
